# EUROPÄISCHE PATENTSCHRIFT

(11) **EP 1 087 500 B1**
(45) Veröffentlichungstag und Bekanntmachung des Hinweises auf die Patenterteilung: **19.11.2003**
(21) Anmeldenummer: 00119505.6
(22) Anmeldetag: 06.09.2000
(51) Int. Cl.: H02K 11/04, H02K 7/116

(54) **Motor-Getriebe-Antriebseinheit, insbesondere Fensterheber- oder Schiebedachantrieb in einem Kraftfahrzeug**
Motor reduction unit, especially window lifter or sliding roof drive in a vehicle
Motoréducteur, en particulier entraînement de lève-vitre ou de toit coulissant de véhicule automobile

(30) Priorität: 27.09.1999 DE 19946266
(43) Veröffentlichungstag der Anmeldung: 28.03.2001
(73) Patentinhaber: SIEMENS AKTIENGESELLSCHAFT, 80333 München (DE)
(72) Erfinder: Knopp, Carsten, Dipl.-Ing. (FH), 93186 Pettendorf (DE)

(56) Entgegenhaltungen:
- DE-A- 4 021 669
- DE-A- 19 727 118
- DE-A- 19 851 455
- US-A- 5 777 410

## Beschreibung

Die Erfindung bezieht sich auf eine Motor-Getriebe-Antriebseinheit, insbesondere Fensterheber- oder Schiebedachantrieb in einem Kraftfahrzeug, gemäß Patentanspruch 1; derartige Antriebseinheiten mit einem Elektromotor und einem axial angeflanschten Getriebe sowie mit einer zu dem Elektromotor achsparallelen Bestromungseinheit zur Versorgung bzw. Regelung des Antriebes sind z.B. durch die DE 42 25 496 A1 bzw. die EP 0 538 495 B1 bekannt.

Im Fall der EP 0 538 495 B1 ist dabei ein eine Motorsteuerund/oder Überwachungselektronik aufnehmendes, zum Motorgehäuse achsparalleles, ansonsten geschlossenes Elektronikgehäuse mit einer offenen Stirnseite im Sinne einer fliegenden Lagerung an eine korrespondierende Gehäuse-Flanschöffnung des Getriebes mechanisch ansteckbar und dabei auch elektrisch kontaktierbar.

Wird zur gegenseitigen Steck-Fixierung von Getriebe einerseits und Bestromungseinheit andererseits eine gegenseitige Rastverbindung mittels vorstehender einzelner Schnapp-Laschen an der Bestromungseinheit und in der Verrastendstellung einrastender korrespondierender Rasthaken an der Motor-Getriebe-Antriebseinheit, insbesondere an dem Getriebe, vorgesehen, so müssen die Schnapp-Laschen quer zu ihrer Verrastebene beim Übergleiten der Rastnocken vor Erreichen der Einrast-Endstellung elastisch auslenkbar sein; für eine leichte Montagehandhabbarkeit böte sich dazu im Sinne der elastischen Auslenkbarkeit eine dünne Wandstärke der Schnapp-Laschen an, jedoch kann dann eine hinreichende Bruchfestigkeit der Schnapp-Verschlüsse nicht mehr gewährleistet werden, wenn die mit der, vorzugsweise fliegend gelagerten, Bestromungseinheit versehene Motor-Getriebe-Antriebseinheit, z.B. als Fensterheber-Antrieb in einer Kraftfahrzeugtür, hohen Stoßbelastungen quer zu den Schnapp-Laschen und deren Verrastebene beim Zuschlagen der Fahrzeugtür oder Biege-Drehmomentbelastungen aufgrund von Gewichts- bzw. Montagehandhabungsbelastungen des freien Endes der fliegend gelagerten Bestromungseinheit relativ zu ihrer Befestigung an der Motor-Getriebe-Antriebseinheit ausgesetzt ist.

Gemäß Aufgabe vorliegender Erfindung soll eine fertigungsund montagetechnisch einfache und trotzdem allen betriebsmäßigen Belastungen genügende Steck-Rastbefestigung zwischen vorstehenden Schnapp-Laschen an der Bestromungseinheit einerseits und korrespondierenden Schnapp-Haken an der Motor-Getriebe-Antriebseinheit andererseits, insbesondere deren Getriebe, geschaffen werden.

Die Lösung der vorgenannten Aufgabe gelingt erfindungsgemäß durch eine Motor-Getriebe-Antriebseinheit mit den Merkmalen des Anspruchs 1; vorteilhafte Ausgestaltungen der Erfindung sind Gegenstand der Unteransprüche.

Durch die DE 197 27 118 A1 ist eine Motor-Getriebe-Antriebseinheit mit den ersten drei Teilmerkmalen des Anspruchs 1 derart bekannt, dass einerseits ein topfförmiges Getriebegehäuse eine topfförmige Kammer im Bereich des Kommutators aufweist und andererseits ein das Getriebegehäuse und die Kammer abschliessender gemeinsamer Deckel an seiner Innenseite elektronische Bauelemente und eine Bürstenhalterung aufnimmt, die beim Auflegen des Deckels auf das Getriebegehäuse und die Kammer in diese radial eintauchen.

Ausgehend von der Erkenntnis, daß die maßgebliche Zusatzbelastung durch Stöße quer zur Verrastebene sowie durch Biegemomente in der Verrastebene sich im wesentlichen durch zusätzliche Zugbelastungen der Laschen-Verbindung auswirkt, kann durch die hautartige Verbindung auf fertigungstechnisch einfache und leicht an die im Einzelfall gegebenen Belastungsverhältnisse durch unterschiedliche Erstreckung und Anbindung der hautartigen Verbindung anzupassende Art eine erhöhte Belastbarkeit ohne Notwendigkeit einer Verstärkung oder Vergrößerung der Wandstärke der Schnapp-Laschen bzw. Wahl eines widerstandsfähigeren Materials und damit einer unerwünschten Beeinträchtigung der elastischen Auslenkbarkeit bzw. des Materialkostenaufwandes erreicht werden.

Die Erfindung sowie weitere vorteilhafte Ausgestaltungen der Erfindung werden im folgenden anhand schematisch dargestellter Ausführungsbeispiele in der Zeichnung näher erläutert, darin zeigen:
- FIG 1-3: in axialer Seitenansicht bzw. perspektivischer Vorder- und Rückansicht eine in Montage-Steckrichtung III mit einer Motor-Getriebe-Antriebseinheit verrastbare Bestromungseinheit mit erfindungsgemäß verstärkten, in Montage-Steckrichtung vorstehenden Schnapp-Laschen,
- FIG 4,5: in axialer Drauf- bzw. axialer Seitenansicht eine komplette Motor-Getriebe-Antriebseinheit mit angesteckter Bestromungseinheit ohne erfindungsgemäß verstärkte Schnapp-Laschen,
- FIG 6: in axialer Seitenansicht die Bestromungseinheit gemäß FIG 1 ohne die erfindungsgemäße Verstärkung der Schnapp-Laschen.

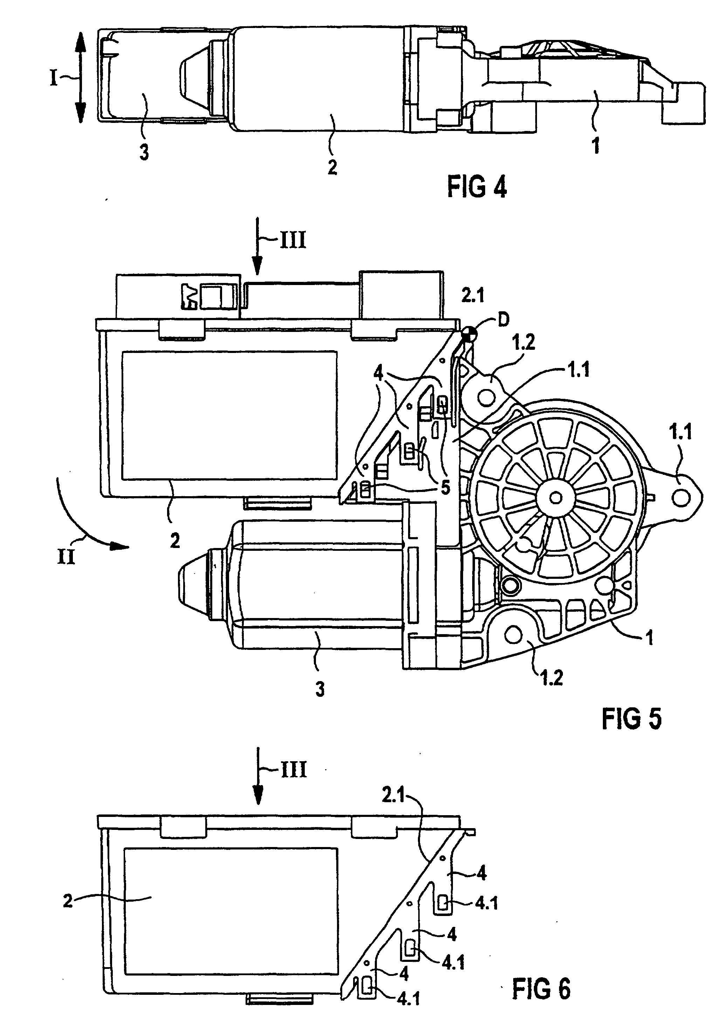

FIG 4,5 zeigen in axialer Draufsicht und Seitenansicht eine, z.B. für einen Fensterheber-Antrieb in einem Kraftfahrzeug einsetzbare, komplette Motor-Getriebe-Antriebseinheit 1,2 mit angesteckter Bestromungseinheit 3. An die stirnoffene Frontseite eines Elektromotors 2 mit topfförmigem Gehäuse ist ein Getriebe 1, wie z.B. aus der eingangs zitierten EP 0 538 495 B1 bekannt, angeflanscht. Achsparallel zu dem Elektromotor 2 ist eine, insbesondere eine Elektronik zur Versorgung, Steuerung, Überwachung usw. des Elektromotors aufnehmende, Bestromungseinheit 3 angeordnet, von der hier im wesentlichen nur das Gehäuse dargestellt ist.

Die Bestromungseinheit 3 ist mit ihrem rechten stirnseitig mit einer Durchführungsöffnung für eine elektrische Kontaktgabe versehenen Ende des ansonsten geschlossenen Gehäuses an einem mit einer korrespondierenden - hier nicht direkt sichtbaren - inneren Durchführungsöffnung versehenen Befestigungsflansch 1.1 des Getriebes 1 durch gegenseitige Verrastung befestigt, der auch der Halterung des Elektromotors 2 dient und dementsprechend radial erweitert ist.

Die derart mit ihrem rechten axialen Ende an der Motor-Getriebe-Antriebseinheit 1,2 verrastete Bestromungseinheit 3 ist in den vorliegenden Ausführungsbeispielen mit ansonsten abstützungsfreier achsparalleler Lage zu dem Motor 2 fliegend gelagert. Die komplette aus Getriebe 1 und Motor 2 und damit verrasteter Bestromungseinheit 3 bestehender Antriebsanordnung ist mittels am Getriebe 1 vorgesehener Befestigungsaugen 1.2 vorzugsweise als Fensterheberantrieb in axialer Längserstreckung in eine Tür eines Kraftfahrzeuges einbaubar.

Durch Stoß-Druckbelastungen in Richtung I beim Türöffnen bzw. Türschließen und durch Biegebelastungen in Richtung II um einen fiktiven Drehpunkt D aufgrund des Eigengewichts bzw. eine entsprechende Montagehandhabung können zusätzliche, über eine normale Verrastungsbefestigung hinausgehende Belastungen auf die Schnapp-Laschen 4 einwirken. Die Beherrschung dieser Zusatzbelastung würde eine Verstärkung der Schnapp-Laschen 4 oder eines belastungsoptimierten Materials erfordern, was zu einer unerwünschten Beeinträchtigung der elastischen Auslenkbarkeit bzw. zu erhöhtem Fertigungs- und Montageaufwand führt.

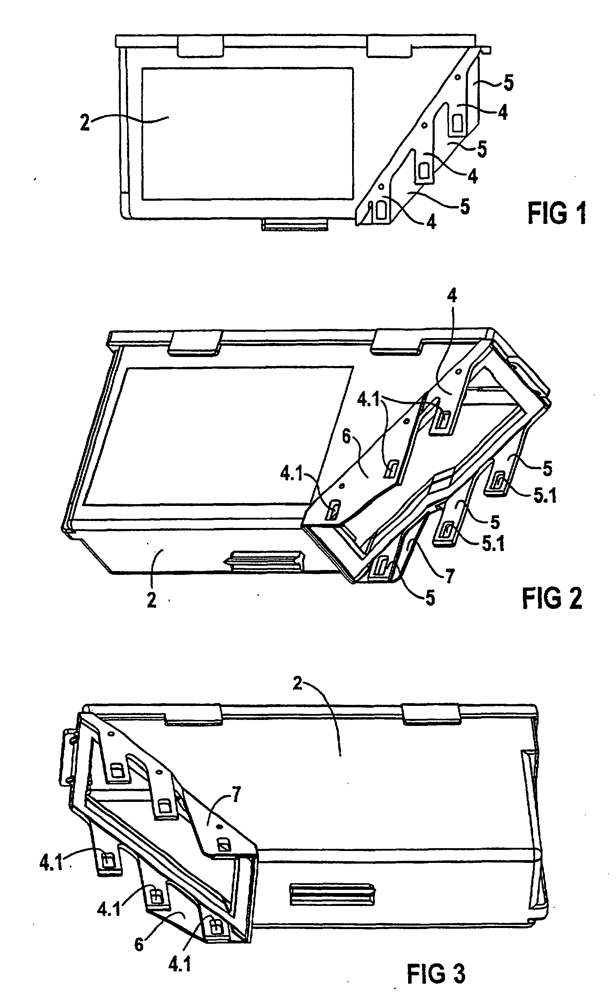

Ausgehend von der Erkenntnis, daß die erläuterten Stoß-Druckbelastungen senkrecht zu Verrastebene bzw. die Biegebelastungen in der Verrastebene sich im wesentlichen in zusätzlichen Zugbelastungen der Schnapp-Laschen 4 niederschlagen sind als fertigungstechnisch besonders einfach herzustellende und trotzdem voll wirksame Verstärkung der Belastbarkeit der Schnapp-Laschen 4 die aus FIG 1 bis FIG 3 ersichtlichen - im folgenden noch näher erläuterten - hautartigen zugbelastbaren Verbindungen 6;7 zwischen einzelnen Schnapp-Laschen 4 untereinander bzw. zwischen Schnapp-Laschen 4 und dem übrigen Gehäusekörper der Bestromungseinheit 3 vorgesehen.

FIG 1 zeigt hautartige zugbelastbare Verbindungen 6 zwischen sämtlichen Schnapp-Laschen 4 mit Anbindung auch an das Gehäuse der Bestromungseinheit 3.

FIG 2,3 zeigen in einer weiteren erfindungsgemäßen Ausgestaltung an der einen seitlichen Verrastebene eine hautartige zugbelastbare Verbindung 6 lediglich zwischen zwei benachbarten Schnapp-Laschen 4 mit zusätzlicher Anbindung an das Gehäuse der Bestromungseinheit 3 bei ungestützter oberer, dem Drehpunkt D benachbarter Schnapp-Lasche; in der anderen seitlichen Verrastebene ist in zweckmäßiger Weise eine an die örtliche, z.B. je nach Einbaulage der Gesamtheit unterschiedliche Verteilung der Zusatzbelastung angepaßte Verstärkung bei gleichzeitig optimaler elastischer Auslenkbarkeit nur an der unteren, radial inneren Schnapp-Lasche 4 in Form einer nur an diese Schnapp-Lasche 4 und das Gehäuse der Bestromungseinheit 3 angebundenen hautartigen zugbelastbaren Verbindung vorgesehen.

Zweckmäßigerweise sind die Wandstärken der hautartigen zubelastbaren Verbindungen 6,7 dünner als die ebenfalls in der Verrastebene liegenden Wände der Schnapp-Laschen 4; die Anbindung der Schnapp-Laschen 4 an die hautartigen zugbelastbaren Verbindungen 6,7 erfolgt fertigungstechnisch besonders einfach durch einstückiges Überspritzen, wobei zur vorteilhaften Einhaltung des geringen zur Verfügung stehenden Bauraums die hautartigen Verbindungen im Bereich ihrer auf die Schnapp-Laschen überspritzten Anbindungsfläche eine nochmals reduzierte Wandstärke aufweisen.

## Patentansprüche

1. Motor-Getriebe-Antriebseinheit, insbesondere Fensterheber- oder Schiebedachantrieb in einem Kraftfahrzeug,
- mit einer an die Motor-Getriebe-Antriebseinheit (1;2) ansteckbaren und dabei mit dieser verrastbaren Bestromungseinheit (3),
- mit einer Verrastung mittels vorstehender einzelner Schnapp-Laschen (4) der Bestromungseinheit (3) und korrespondierender Rasthaken (5) der Motor-Getriebe-Antriebseinheit (1;2),
- mit Laschen-Wandstärken der einzelnen Schnapp-Laschen (4;5) im Sinne einer elastischen Auslenkbarkeit ihrer freien Enden senkrecht zu ihrer Verrastebene beim Übergleiten der Rasthaken (5) vor deren Einschnappen in die Schnapp-Laschen (4) bei Erreichen der Verrastendstellung,
- mit einer hautartigen zugbelastbaren Verbindung (6;7) zumindest einzelner Schnapp-Laschen (4) untereinander bzw. zu der Bestromungseinheit (3) im Sinne einer erhöhten Zugfestigkeit der Schnapp-Laschen (4) ohne wesentliche Behinderung ihrer zu der Fläche der hautartigen Verbindung senkrechten elastischen Auslenkbarkeit.

2. Motor-Getriebe-Antriebseinheit nach Anspruch 1
- mit einer gegenüber der Wandstärke der Schnapp-Laschen (4) verringerten Wandstärke der hautartigen Verbindung (6;7)

3. Motor-Getriebe-Antriebseinheit nach Anspruch 1 und/oder 2
- mit einer einstückigen Ausbildung der hautartigen zugbelastbaren Verbindung (6;7) mit den Schnapp-Laschen (4) bzw. der Bestromungseinheit (3).

4. Motor-Getriebe-Antriebseinheit nach zumindest einem der Ansprüche 1 bis 3
- mit einer einstückigen Anformung der einzelnen vorstehenden Schnapp-Laschen (4) an die Bestromungseinheit (3), insbesondere an ein Gehäuse der Bestromungseinheit.

5. Motor-Getriebe-Antriebseinheit nach zumindest einem der Ansprüche 1 bis 3
- mit einer Herstellung der Bestromungseinheit (3) als Kunststoffteil, insbesondere als Kunststoff-Spritzgußteil.

6. Motor-Getriebe-Antriebseinheit nach zumindest einem der Ansprüche 1 bis 5
- mit einer fliegenden Lagerung der nur an ihrem einen Ende durch die Verrastung mit der Motor-Getriebe-Antriebseinheit (1) gehaltenen Bestromungseinheit (3).

7. Motor-Getriebe-Antriebseinheit nach zumindest einem der Ansprüche 1 bis 6
- mit einer axialen Hintereinanderanordnung des Motors (2) in Form eines Elektromotors und des Getriebes (1) der Motor-Getriebe-Antriebseinheit (1;2),
- mit einer Verrastung der Bestromungseinheit (3) mit dem Getriebe (1) im Bereich eines, insbesondere entsprechend radial erweiterten, Befestigungsflansches (1.1) zur Verbindung mit dem Motor(2).

8. Motor-Getriebe-Antriebseinheit nach zumindest einem der Ansprüche 1 bis 7
- mit einer Anordnung der Bestromungseinheit (3) in achsparallelem Abstand zu dem Motor (2) der Motor-Getriebe-Antriebseinheit (1;2).

9. Motor-Getriebe-Antriebseinheit nach zumindest einem der Ansprüche 1 bis 8
- mit einer Schwingungsbelastung der Bestromungseinheit (3), insbesondere ihres der Verrastung abgewandten Endes, quer zu der Verrastebene.

10. Motor-Getriebe-Antriebseinheit nach zumindest einem der Ansprüche 1 bis 9
- mit einer Biegebelastung des ihrer Verrastung abgewandten, insbesondere aufgrund einer fliegenden Lagerung freien, Endes der Bestromungseinheit (3), insbesondere in einer der Verrastebene parallelen Ebene.

## Claims

1. Motor transmission drive unit, in particular a drive system for a window winding mechanism or sunroof in a motor vehicle,
- with a power supply unit (3) which can be clipped on and also latched to the motor transmission drive unit (1;2),
- with a latching system by means of projecting individual snap-on tabs (4) on the power supply unit (3) and corresponding locking hooks (5) on the motor transmission drive unit (1;2),
- with the tab wall thickness of the individual snap-on tabs (4;5) being provided by means of the capacity of their free ends to be deflected in an elastic manner perpendicular to their latching plane as the locking hooks (5) slide across before being snapped into the snap-on tabs (4) on reaching the final locking position,
- with a skin-type, tensionable connection (6;7) of at least individual snap-on tabs (4) in respect of each other or to the power supply unit (3) being provided in that the snap-on tabs (4) have an increased tensile strength without significantly impeding their capacity to be deflected in an elastic manner perpendicular to the surface of the skin-type connection.

2. Motor transmission drive unit according to Claim 1,
- with the wall thickness of the skin-type connection (6;7) being reduced in comparison to the wall thickness of the snap-on tabs (4);

3. Motor transmission drive unit according to Claim 1 and/or 2
- with a single-piece configuration of the skin-type tensionable connection (6;7) with the snap-on tabs (4) or the power supply unit (3).

4. Motor transmission drive unit according to at least one of Claims 1 to 3
- with single-piece molding of the individual projecting snap-on tabs (4) onto the power supply unit (3), in particular onto a housing of the power supply unit.

5. Motor transmission drive unit according to at least one of Claims 1 to 3
- with the power supply unit (3) being manufactured as a plastic component, in particular an injection-molded plastic component.

6. Motor transmission drive unit according to at least one of Claims 1 to 5
- with a cantilever support for the power supply unit (3) only held at its one end by the latching system with the motor transmission drive unit (1).

7. Motor transmission drive unit according to at least one of Claims 1 to 6
- with an axial series arrangement of the motor (2) in the form of an electric motor and the transmission (1) of the motor transmission drive unit (1;2),
- with a latching system for the power supply unit (3) to the transmission (1) in the area of an attachment flange (1.1), particularly with a corresponding radial extension, for connection to the motor (2).

8. Motor transmission drive unit according to at least one of Claims 1 to 7
- with the power supply unit (3) being arranged at a distance from the motor (2) of the motor transmission drive unit (1;2) with parallel axes.

9. Motor transmission drive unit according to at least one of Claims 1 to 8
- with a vibration stress acting on the power supply unit (3), in particular its end away from the latching system, transverse to the latching plane.

10. Motor transmission drive unit according to at least one of Claims 1 to 9
- with a bending stress acting on the end of the power supply unit (3) away from its latching system, in particular free due to a cantilever support, in particular in a plane parallel to the latching plane.

## Revendications

1. Ensemble d'entraînement à moteur et engrenage, plus particulièrement mécanisme d'entraînement de lève-vitre ou de fenêtre de toit dans un véhicule automobile,
- comprenant un bloc d'alimentation (3) pouvant être emboîté sur l'ensemble d'entraînement à moteur et engrenage (1, 2) et pouvant ainsi être enclenché sur celui-ci,
- comprenant un dispositif d'encliquetage au moyen de languettes d'accrochage (4) individuelles en saillie sur le bloc d'alimentation (3) et de crochets d'encliquetage correspondant (5) sur l'ensemble d'entraînement à moteur et engrenage (1, 2),
- avec des épaisseurs des parois de languettes de chacune des languettes d'accrochage (4, 5) dans le sens de l'écartement par élasticité perpendiculairement à leur plan d'enclenchement lorsqu'elles glissent sur les crochets d'enclenchement (5) avant leur accrochage dans les languettes d'accrochage (4) en atteignant la position finale d'enclenchement,
- comprenant une liaison (6, 7) de type pelliculaire résistant à une contrainte de traction au moins des languettes d'accrochage (4) étant disposées entre elles ou avec le bloc d'alimentation (3) en vue d'une résistance à la traction accrue des languettes d'accrochage (4) sans affecter de manière importante leur aptitude à l'écartement par élasticité perpendiculaire à la surface de la liaison de type pelliculaire.

2. Ensemble d'entraînement à moteur et engrenage selon la revendication 1,
- l'épaisseur de paroi de la liaison de type pelliculaire (6, 7) étant réduite par rapport à l'épaisseur des languettes d'accrochage (4).

3. Ensemble d'entraînement à moteur et engrenage selon la revendication 1 et/ou 2,
- comportant une configuration d'une seule pièce de la liaison (6, 7) de type pelliculaire résistante à une contrainte de traction et des languettes d'accrochage (4) ou du bloc d'alimentation (3).

4. Ensemble d'entraînement à moteur et engrenage selon au moins l'une des revendications 1 à 3,
- comportant un façonnage d'une seule pièce des languettes d'accrochage individuelles en saillie (4) sur le bloc d'alimentation (3), notamment sur un boîtier du bloc d'alimentation.

5. Ensemble d'entraînement à moteur et engrenage selon au moins l'une des revendications 1 à 3,
- comportant une fabrication du bloc d'alimentation (3) sous la forme d'une pièce en matière plastique, plus particulièrement sous la forme d'une pièce en matière plastique moulée par injection.

6. Ensemble d'entraînement à moteur et engrenage selon au moins l'une des revendications 1 à 5,
- comportant un support flottant du bloc d'alimentation (3) maintenu par enclenchement seulement au niveau de son extrémité à l'ensemble d'entraînement à moteur et engrenage (1).

7. Ensemble d'entraînement à moteur et engrenage selon au moins l'une des revendications 1 à 6,
- comportant une disposition l'un derrière l'autre dans le sens axial du moteur (2) sous la forme d'un moteur électrique et de l'engrenage (1) de l'ensemble d'entraînement à moteur et engrenage (1, 2), et
- un enclenchement du bloc d'alimentation (3) avec l'engrenage (1) dans la zone d'une bride de fixation (1.1), notamment élargie en conséquence dans le sens radial, en vue d'une liaison avec le moteur (2).

8. Ensemble d'entraînement à moteur et engrenage selon au moins l'une des revendications 1 à 7,
- comportant un arrangement du bloc d'alimentation (3) à une certaine distance et avec son axe parallèle à celui du moteur (2) de l'ensemble d'entraînement à moteur et engrenage (1, 2).

9. Ensemble d'entraînement à moteur et engrenage selon au moins l'une des revendications 1 à 8,
- comportant une contrainte oscillatoire du bloc d'alimentation (3), notamment de son extrémité opposée à l'enclenchement, dans le sens transversal par rapport au plan d'enclenchement.

10. Ensemble d'entraînement à moteur et engrenage selon au moins l'une des revendications 1 à 9,
- comportant une contrainte de flexion de l'extrémité libre du bloc d'alimentation (3) à l'opposé de son enclenchement, notamment en raison d'un support flottant, plus particulièrement dans un plan parallèle au plan d'enclenchement.
